# EUROPEAN PATENT APPLICATION

(11) **EP 1 974 870 A1**
(43) Date of publication of application: **01.10.2008**
(21) Application number: 07105312.8
(22) Date of filing: 30.03.2007
(51) Int. Cl.: B25J 9/16, B25J 19/00, H02P 3/04

(54) **An industrial robot having a plurality of independently controlled electromagnetic brakes**

(71) Applicant: ABB RESEARCH LTD., 8050 Zürich (CH)
(72) Inventor: Hosini, Falah, SE-723 51, Västerås (SE); Zelaya De La Parra, Hector, SE-722 46, Västerås (SE)
(74) Representative: Olsson, Jan

(57) **Abstract**

A brake control device for an industrial robot having members pivotally connected to each other about at least three axes and for each said axis on one hand a motor for pivoting movement of two said members with respect to each other about this axis and on the other an electromagnetic brake for locking two said members in a fixed position with respect to each other, comprises an electric power supply means (30) and at least two branches (38-43) connecting said electric power supply means to different said electromagnetic brakes. Each said branch is provided with a switch (32-37), and a brake control unit (56) is designed to be able to individually control said switches for controlling the electromagnetic brake or brakes associated with the respective switch to be released or locked independently of the electromagnetic brake or brakes associated with the other switch or switches.

## Description

### TECHNICAL FIELD OF THE INVENTION AND PRIOR ART

The present invention relates to an industrial robot having members pivotally connected to each other about at least three axes, for each said axis on one hand a motor for pivoting movement of two said members with respect to each other about this axis and on the other an electromagnetic brake for locking two said members in a fixed position with respect to each other, an electric power supply means for feeding electric power to said electromagnetic brakes and a brake control unit adapted to control supply of electric power from said electric power supply means to the electromagnetic brakes and by that the operation of said brakes, said brake control unit being adapted to control said electromagnetic brakes to be released by controlling said electric power supply means to feed a voltage of at least a predetermined level to the electromagnetic brakes and to activate said electromagnetic brakes released to lock said members with respect to each other by applying a zero voltage to said electromagnetic brakes, as well as a brake control device according to the preamble of the appended independent device claim.

The invention relates to industrial robots for any conceivable use, such as for example welding, painting, removal of goods, etc.

The number of axes is often six in such an industrial robot in order to achieve maximum freedom of movement for a gripping claw, spray nozzle, or the like, mounted at the outer end of an upper arm via a so-called wrist. However, the invention also includes industrial robots with fewer axes, i.e. at least three axes, or even more than six axes.

As mentioned above, for each axis of the robot a separate motor is arranged for obtaining pivoting movement of two members, such as lower arm and upper arm, of the robot about this axis. Furthermore, a separate electromagnetic brake is also arranged in connection with each axis. The motor is controlled by a control unit for carrying out a said pivoting movement, and this control also includes a retardation of these members with respect to each other when they are reaching a target position. Thus, the control of the motor takes care of "the real braking" of the movement, and the electromagnetic brake is arranged for locking the respective two members in a fixed position with respect to each other for ensuring that they will not move with respect to each other before a voltage of at least a predetermined level is applied to the electromagnetic brake, such as across a winding thereof, which will release the brake. The brake control unit is then adapted to lock said members with respect to each other again by applying a zero voltage, i.e. substantially no voltage to the electromagnetic brake. It is pointed out that "zero voltage" is here to be interpreted as a voltage being substantially zero.

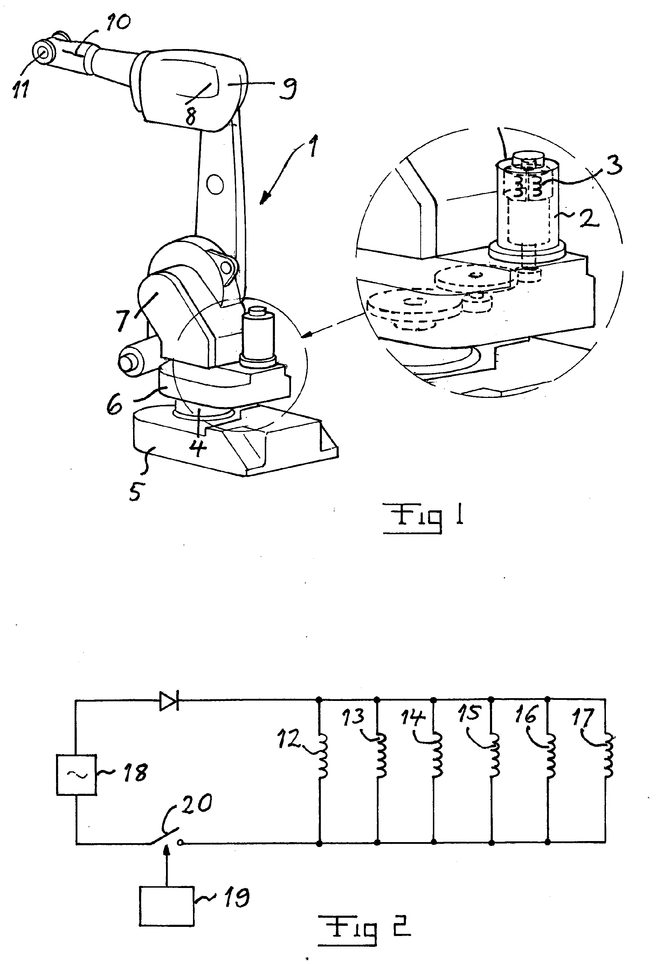

Fig 1 shows very schematically a known industrial robot 1 and how a motor 2 and an electromagnetic brake 3 may be arranged for a so-called first axis 4 between a fixed base 5 and a frame 6 of the robot. Such a motor 2 and electromagnetic brake 3 are also arranged in connection with the other axes 7-11 schematically indicated in Fig 1.

A known brake control device of an industrial robot of this type is very schematically illustrated in Fig 2, and this is of the same type as the brake control device disclosed in US 6 294 887 B1. This brake control device has six electromagnetic brakes 12-17, one for each axis of the robot, an electric power supply means 18 for feeding electric power in the form of a direct voltage to these electromagnetic brakes when a brake control unit 19 controls a switch 20 to close. Thus, the electromagnetic brakes 12-17 may altogether through a common electric power supply means 18 be controlled to be all released by closing the switch 20 and to be all locked by subsequently open the switch 20.

The present inventors have realized that there is a number of disadvantages of a brake control device of the type shown in Fig 2. One such disadvantage is that all electromagnetic brakes have to be released even if only a movement with respect to one or few axes of the robot is to be obtained, which results in a production of unnecessary extra heat in motors associated with the other axes due to brake power consumption. Another disadvantage that may be mentioned is that it will not be possible to check the proper function of one particular electromagnetic brake if that would be desired.

### SUMMARY OF THE INVENTION

The object of the present invention is to provide an industrial robot and a brake control device of the type defined in the introduction, which are improved in at least some aspect with respect to such an industrial robot and brake control device, respectively, already known.

This object is according to the invention obtained by providing such a robot and device further comprising at least two branches connecting said electric power supply means to different said electromagnetic brakes, in which each said branch is provided with a switch, and said brake control unit is designed to be able to individually control said switches for controlling the electromagnetic brake or brakes associated with the respective switch to be released or locked independently of the electromagnetic brake or brakes associated with the other switch or switches.

An advantage of an industrial robot and a brake control device of this type is that it will be possible to more selectively control exactly the electromagnetic brakes to be released, which are associated with axes about which a pivoting movement is to be carried out. This results in a reduced production of heat and a saving of electric power. Furthermore, it will be possible to check the proper function of an individual or a group of electromagnetic brakes by selective control thereof. Another advantage is that in a brake control device of this type single faults may be tolerated and faults in one electromagnetic brake will only affect this brake with associated motor and the other brakes may be functional.

According to an embodiment of the invention a said branch and switch is arranged for each said electromagnetic brake, and said brake control unit is designed to be able to individually control each said brake by controlling said switch associated therewith. This results in an optimum freedom of individually controlling and checking the proper function of each electromagnetic brake. This also means that no extra heat will be generated in any motor by brake power consumption where it is not needed.

According to another embodiment of the invention the brake control device is adapted to control said electromagnetic brakes of an industrial robot having six said axes.

According to further embodiment of the invention each said switch comprises a controllable semiconductor device, and said brake control unit is adapted to control said semiconductor device for connecting and disconnecting the electric power supply means with respect to the respective electromagnetic brake or brakes. This means that each electromagnetic brake may be reliably controlled by simple means.

According to another embodiment of the invention said electric power supply is a direct voltage source, preferably of a voltage substantially corresponding to said predetermined level. It is then also preferred that said electric power supply means is separated from an arrangement adapted to supply electric power to said motors of the robot, which increases the reliability of the brake control device and also the possibility to reduce the brake power consumption. Furthermore, this solution removes possible extra components, such as transformers and/or converters, otherwise needed for obtaining a voltage of a desired magnitude to be applied to the electromagnetic brakes.

According to another embodiment of the invention said brake control unit is adapted to control a said switch to apply said voltage of said predetermined level for releasing a said electromagnetic brake and then to control the electromagnetic brake to remain released by controlling said switch according to a Pulse Width Modulation (PWM) pattern to apply a voltage of a level lower than said predetermined level to said electromagnetic brake. This means that an electromagnetic brake once released may be kept released while consuming less power than if a voltage of said predetermined level would be applied to the electromagnetic brake until it has to be transferred to the locking state again.

According to another embodiment of the invention an additional switch in common to all electromagnetic brakes is arranged for emergency stop of movements of the robot, and said brake control unit is adapted to control said additional switch to apply a zero voltage to all electromagnetic brakes for obtaining a said emergency stop. This means that said electromagnetic brakes may in an emergency case be used to really brake movements of said members with respect to each other while assisting said motors in the braking action or taking care thereof alone.

According to another embodiment of the invention said brake control unit is designed to be able to optionally control said electromagnetic brakes individually or in groups. The presence of this control option offers a great flexibility in the control of the electromagnetic brakes.

According to another embodiment of the invention for each electromagnetic brake a means is arranged for sensing the current arriving to that brake and sending information thereabout to said brake control unit. This means a possibility to detect overcurrent or short-circuit conditions in different electromagnetic brakes for protection thereof.

According to another embodiment of the invention diagnostic means associated with said electromagnetic brakes are arranged for testing whether individual electromagnetic brakes are open-circuited or short-circuited. This makes it possible to ensure during start-up that the individual brakes are neither open-circuited nor short-circuited.

According to another embodiment of the invention said electric power supply means is adapted to feed a voltage of at least a said predetermined level being 15-40 V, advantageously 20-30 V, such as about 24 V, to said electromagnetic brakes. A voltage of this level is suitable for controlling such electromagnetic brakes to be released while keeping the brake power consumption at an acceptably low level.

Further advantages as well as advantageous features of the invention will appear from the following description.

### BRIEF DESCRIPTION OF THE DRAWINGS

With reference to the appended drawings, below follows a specific description of embodiments of the invention cited as examples. In the drawings:
- Fig 1: is a schematic view illustrating the general structure of an industrial robot to which the present invention may be applied,
- Fig 2: is a very schematic diagram showing a known brake control device,
- Fig 3: is a diagram similar to the one according to Fig 2 of a brake control device according to a first embodiment of the present invention, and
- Fig 4: is a diagram corresponding to Fig 3 of a brake control device according to a second embodiment of the invention.

### DETAILED DESCRIPTION. OF EMBODIMENTS OF THE INVENTION.

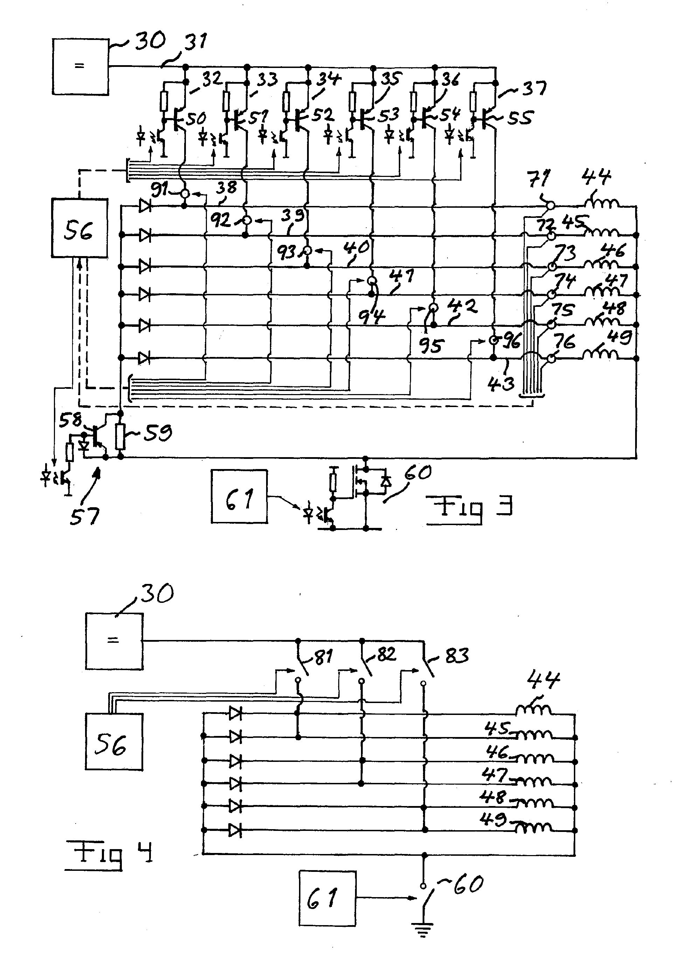

The brake control device according to a first embodiment of the invention schematically illustrated in Fig 3 comprises an electric power supply means 30 in the form of a 24 V power source separated from an arrangement adapted to supply electric power to the motors of the robot and connected via a safe cable 31 to a number of switches 32-37 arranged in a respective branch 38-43 connecting the electric power supply means 30 to a respective said electromagnetic brake 44-49. Each said switch 32-37 comprises a controllable semiconductor device 50-55, such as an IGBT or any other type of transistor, and a freewheeling diode, and a brake control unit 56 is adapted to individually control each said semiconductor device and thereby each switch 32-37 for individually control the electromagnetic brakes 44-49. Thus, the brake control unit may connect selective electromagnetic brakes to the electric power supply means 30 for applying 24 V thereto and thereby releasing the electromagnetic brake when this is locked.

Said brake control unit is adapted to after having controlled an electromagnetic brake to be released to control the electromagnetic brake to remain released by controlling the respective of said switches 32-37 according to a Pulse Width Modulation (PWM) pattern to apply a voltage of a level lower than said predetermined level (24 V) to said electromagnetic brake. Said Pulse Width Modulation is preferably carried out with a high frequency, such as in the order of 1 kHz, and the mean voltage may be lowered by 20-60%, preferably 30-50%, thereby. Means 57 is arranged for prevention of high current ripple during the PWM switching. This means has a transistor switch 58 in parallel with a resistor 59 and is controlled by said brake control unit 56. Thus, a so called brake economizer is formed in this way resulting in a reduction of the power needed for keeping the respective electromagnetic brake released.

The brake control device according to the invention further comprises an additional switch 60 in common to all the electromagnetic brakes for emergency stop of movements of the robot, and said brake control unit is adapted to control this additional switch to apply a zero voltage to all electromagnetic brakes for obtaining a said emergency stop. Such an emergency stop may also be demanded directly from a safety board 61 of the robot.

Furthermore, the brake control device comprises for each said electromagnetic brake a means 71-76 for sensing the current arriving to that brake and sending information thereabout to said brake control unit 56. This makes it possible to detect an overcurrent or short-circuit in the respective component for obtaining appropriate protection thereof.

The device further comprises diagnostic means 91-96 associated with said electromagnetic brakes for testing whether individual electromagnetic brakes are open-circuited or short-circuited, for start-up to be ensured that the individual brakes are neither open-circuited nor short-circuited.

The function of the brake control device schematically illustrated in Fig 3 appears clearly from above, but it will now be briefly summarized. When the switches 32-37 are open the electromagnetic brakes 44-49 will have no voltage, i.e. a zero voltage, applied across the windings thereof and they will lock the output shafts of the respective motor and by that the robot members connected to each other about respective robot axis in a fixed position with respect to each other. It is necessary to apply a voltage above a predetermined level, such as above 23.5 V, for releasing a said electromagnetic brake. This is done by a control of the brake control unit 56 to close one or more of said switches 32-37, so that 24 V from the power supply means 30 will be applied to the electromagnetic brake connected to a closed switch. The brake control unit 56 will then control said switch or switches according to a Pulse Width Modulation pattern, so that a mean voltage being lower than 24 V will be applied to the brake released. This means a reduced power consumption with respect to continuously applying a voltage of 24 V to said brake. An individual brake may then be activated again by controlling the respective switch 32-37 to open again. However, it is also possible to activate all electromagnetic brakes simultaneously by activating the emergency switch 60 through the safety board 61 of the robot should the circumstances require this.

Fig 4 shows very schematically a brake control device according to a second embodiment of the invention, which differs from the embodiment shown in Fig 3 by the fact that the electromagnetic brakes 44-49 are controlled in groups of two brakes through one switch 81-83 for each said group. These switches 81-83 are preferably of the same type as the switches 32-37 in the embodiment according to Fig 3. Thus, this embodiment is slightly simplified with respect to the embodiment according to Fig 3 by the arrangement of fewer switches and by that also a simplified control circuitry.

The invention is of course not in any way restricted to the embodiments described above, but many possibilities to modifications thereof will be apparent to a person with ordinary skill in the art without departing from the basic idea of the invention as defined in the appended claims.

## Claims

1. An industrial robot having members (5, 6) pivotally connected to each other about at least three axes (4, 7-11), for each said axis on one hand a motor (2) for pivoting movement of two said members with respect to each other about this axis and on the other an electromagnetic brake (3, 44-49) for locking two said members in a fixed position with respect to each other, an electric power supply means (30) for feeding electric power to said electromagnetic brakes and a brake control unit (56) adapted to control supply of electric power from said electric power supply means to the electromagnetic brakes and by that the operation of said brakes, said brake control unit being adapted to control said electromagnetic brakes to be released by controlling said electric power supply means (30) to feed a voltage of at least a predetermined level to the electromagnetic brakes and to activate said electromagnetic brakes released to lock said members with respect to each other by applying a zero voltage to said electromagnetic brakes,
**characterized in that** the robot further comprises at least two branches (38-43) connecting said electric power supply means to different said electromagnetic brakes, that each said branch is provided with a switch (32-37, 81-83), and that said brake control unit (56) is designed to be able to individually control said switches for controlling the electromagnetic brake or brakes associated with the respective switch to be released or locked independently of the electromagnetic brake or brakes associated with the other switch or switches.

2. An industrial robot according to claim 1, **characterized in that** it comprises a said branch (38-43) and switch (32-37) for each said electromagnetic brake (44-49), and that said brake control unit is designed to be able to individually control each said brake by controlling said switch associated therewith.

3. An industrial robot according to claim 1 or 2, **characterized in that** the number of said axes (4, 7-11) of the robot is six.

4. An industrial robot according to any of the preceding claims, **characterized in that** each said switch (32-37, 81-83) comprises a controllable semiconductor device (50-55), and that said brake control unit (56) is adapted to control said semiconductor device for connecting and disconnecting the electric power supply means (30) with respect to the respective electromagnetic brake or brakes (44-49).

5. An industrial robot according to any of the preceding claims, **characterized in that** said electric power supply means (30) is a direct voltage source, preferably of a voltage substantially corresponding to said predetermined level.

6. An industrial robot according to claims 4 and 5, **characterized in that** said brake control unit (56) is adapted to control a said switch (32-37, 81-83) to apply said voltage of said predetermined level for releasing a said electromagnetic brake (44-49) and then to control the electromagnetic brake to remain released by controlling said switch according to a Pulse Width Modulation (PWM) pattern to apply a voltage of a level lower than said predetermined level to said electromagnetic brake.

7. An industrial robot according to any of the preceding claims, **characterized in that** it comprises an additional switch (60) in common to all electromagnetic brakes (44-49) for emergency stop of movements of the robot, and that said brake control unit (56) or a safety board (61) of the robot is adapted to control said additional switch to apply a zero voltage to all electromagnetic brakes for obtaining a said emergency stop.

8. An industrial robot according to any of the preceding claims, **characterized in that** said brake control unit (56) is designed to be able to optionally control said electromagnetic brakes individually or in groups.

9. An industrial robot according to any of the preceding claims, **characterized in that** it further comprises for each said electromagnetic brake (44-49) a means (71-76) for sensing the current arriving to that brake and sending information thereabout to said brake control unit (56).

10. An industrial robot according to any of the preceding claims, **characterized in that** it comprises diagnostic means (91-96) associated with said electromagnetic brakes (44-49) for testing whether individual electromagnetic brakes are open-circuited or short-circuited.

11. An industrial robot according to any of the preceding claims, **characterized in that** said electric power supply means (30) is adapted to feed a voltage of at least a said predetermined level being 15-40 V, advantageously 20-30 V, such as about 24 V, to said electromagnetic brakes (44-49).

12. An industrial robot according to any of the preceding claims, **characterized in that** said electric power supply means (30) is separate from an arrangement adapted to supply electric power to said motors (2) of the robot.

13. A brake control device for an industrial robot having members (5, 6) pivotally connected to each other about at least three axes (4, 7-11) and for each said axis on one hand a motor (2) for pivoting movement of two said members with respect to each other about this axis and on the other an electromagnetic brake (3, 44-49) for locking two said members in a fixed position with respect to each other, said device comprising an electric power supply means (30) for feeding electric power to said electromagnetic brakes and a brake control unit (56) adapted to control supply of electric power from said electric power supply means to the electromagnetic brakes and by that the operation of said brakes, said brake control unit being adapted to control said electromagnetic brakes to be released by controlling said electric power supply means (30) to feed a voltage of at least a predetermined level to the electromagnetic brakes and to activate said electromagnetic brakes released to lock said members with respect to each other by applying a zero voltage to said electromagnetic brakes,
**characterized in that** the device further comprises at least two branches (38-43)connecting said electric power supply means to different said electromagnetic brakes, that each said branch is provided with a switch (32-37, 81-83), and that said brake control unit (56) is designed to be able to individually control said switches for controlling the electromagnetic brake or brakes associated with the respective switch to be released or locked independently of the electromagnetic brake or brakes associated with the other switch or switches.

14. A device robot according to claim 1, **characterized in that** it comprises a said branch (38-43) and switch (32-37) for each said electromagnetic brake (44-49), and that said brake control unit is designed to be able to individually control each said brake by controlling said switch associated therewith.

15. A device according to claim 13 or 14, **characterized in that** it is adapted to control said electromagnetic brakes of an industrial robot having six said axes (4, 7-11).

16. A device according to any of claims 13-15, **characterized in that** each said switch (32-37, 81-83) comprises a controllable semiconductor device (50-55), and that said brake control unit (56) is adapted to control said semiconductor device for connecting and disconnecting the electric power supply means (30) with respect to the respective electromagnetic brake or brakes (44-49).

17. A device according to any of claims 13-16, **characterized in that** said electric power supply means (30) is a direct voltage source, preferably of a voltage substantially corresponding to said predetermined level.

18. A device according to claims 16 and 17, **characterized in that** said brake control unit (56) is adapted to control a said switch (32-37, 81-83) to apply said voltage of said predetermined level for releasing a said electromagnetic brake (44-49) and then to control the electromagnetic brake to remain released by controlling said switch according to a Pulse Width Modulation (PWM) pattern to apply a voltage of a level lower than said predetermined level to said electromagnetic brake.

19. A device according to any of claims 13-18, **characterized in that** it comprises an additional switch (60) in common to all electromagnetic brakes (44-49) for emergency stop of movements of the robot, and that said brake control unit or a safety board of the robot is adapted to control said additional switch to apply a zero voltage to all electromagnetic brakes for obtaining a said emergency stop.

20. A device according to any of claims 13-19, **characterized in that** said brake control unit (56) is designed to be able to optionally control said electromagnetic brakes individually or in groups.

21. A device according to any of claims 13-20, **characterized in that** it further comprises for each said electromagnetic brake (44-49) a means (71-76) for sensing the current arriving to that brake and sending information thereabout to said brake control unit (56).

22. A device according to any of claims 13-21, **characterized in that** it comprises diagnostic means (91-96) associated with said electromagnetic brakes (44-49) for testing whether individual electromagnetic brakes are open-circuited or short-circuited.

23. A device according to any of claims 13-22, **characterized in that** said electric power supply means (30) is adapted to feed a voltage of at least a said predetermined level being 15-40 V, advantageously 20-30 V, such as about 24 V, to said electromagnetic brakes (44-49).

24. A device according to any of claims 13-23, **characterized in that** said electric power supply means (30) is separate from an arrangement adapted to supply electric power to said motors (2) of the robot.
